(19) Europäisches Patentamt
European Patent Office
Office européen des brevets

(11) EP 3 713 079 A1

(12) **EUROPEAN PATENT APPLICATION**

(43) Date of publication:
**23.09.2020 Bulletin 2020/39**

(21) Application number: **19163993.9**

(22) Date of filing: **20.03.2019**

(51) Int Cl.:
**H02P 29/50** $^{(2016.01)}$    **H02P 6/00** $^{(2016.01)}$

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB Schweiz AG**
**5400 Baden (CH)**

(72) Inventors:
• PERETTI, Luca
  17675 Järfälla (SE)
• HIRVONEN, Mikko
  00980 Helsinki (FI)
• KALLIO, Samuli
  00530 Helsinki (FI)

(74) Representative: **Kolster Oy Ab**
**(Salmisaarenaukio 1)**
**P.O. Box 204**
**00181 Helsinki (FI)**

(54) **CONTROL OF A MULTIPHASE MACHINE**

(57) The present disclosure relates to a method for controlling a multiphase electrical machine (2) having a stator (3) with three-phase windings (5). The method comprises receiving current measurements (6) of the windings. The method also comprises using VSD to determine a measured current vector comprising fundamental and harmonic frequency components of the measured currents combined, determine a reference current vector comprising fundamental and harmonic frequency components of the current reference, and determine a multiphase voltage reference vector comprising fundamental and harmonic frequency components. The method also comprises, for each of the n three-phase windings, calculating a three-phase voltage reference based on a predetermined relationship between the determined multiphase reference voltage vector and the respective n three-phase voltage references. The method also comprises, providing the calculated three-phase voltage reference to a respective three-phase modulator (8) for a power electronic converter (7) connected with said three-phase winding.

Fig. 1

**Description**

**TECHNICAL FIELD**

The present disclosure relates to a method and a controller for controlling a multiphase electrical machine.

**BACKGROUND**

In some cases, multi-phase machines with 3n phases (n > 1) can bring benefits of power density, torque smoothness and fault tolerance. However, a key issue is a proper regulation of the machine 3n currents, which is not easily achieved with standard drives. The state of the art is to run the parallel of n three-phase drives with their own three-phase control, possibly achieving high current ripples, and thus higher overall losses.

Only very special 3n-phase machine designs can be simply driven by n three-phase converters with their own three-phase control in parallel. Without or with limited communication between the drives, and thus without a complete view of the behaviour of the machine, the control problem will be split to n three-phase control problems, one for each set of windings. Such an approach works when the mutual magnetic coupling between the different sets of three-phase windings is kept at minimum by design, and thus the magnetic interference between the controllers regulating three-phase currents independently is not felt.

However, since the converters are on the path of the plug-and-play trend, and thus should be capable of controlling any 3n-phase machines, the assumption of negligible mutual magnetic coupling cannot be instated *a priori* if significant current ripples and a large loss dissipation are to be avoided.

Reinstating correct current regulation for multi-phase machines requires an approach based on the theory of vector-space decomposition (VSD), as set out by Zhao et al. in "Space Vector PWM Control of Dual Three-Phase Induction Machine Using Vector Space Decomposition", IEEE TRANSACTIONS ON INDUSTRY APPLICATIONS, VOL. 31, NO. 5, SEPTEMBER/OCTOBER 1995, pages 1100-1109. This theory generalizes the three-phase current controllers by including also higher-order harmonic control for a number of odd harmonics equal to ceil (3n/2), which are integral part of the 3n-phase machine model. The VSD theory shows that the dynamics of such harmonics is driven by fairly small inductances (only leakage, in distributed winding cases) and thus subjected to potentially nasty current ripples if wrongly excited by the voltage source. Thus, their control is utmost required.

However, the physical implementation of the VSD approach is not as modular and robust (in terms of control performances) as the parallel of n drives. The reason is that the VSD requires a central controller and a suitable 3n-phase voltage modulator, thus demanding a partial or complete re-design of conventional drive hardware and software.

**SUMMARY**

It is an objective of the present invention to improve the control of a 3n-phase electrical machine using VSD. In accordance with the present invention this improvement is achieved by obtaining three-phase voltage references from the VSD theory, enabling the use of conventional three-phase modulators and three-phase power electronic converters in parallel with each other for controlling each of the n three-phase windings of the machine.

According to an aspect of the present invention, there is provided a method for controlling a multiphase electrical machine having a stator with n three-phase windings (n≥2). The method comprises receiving measurements of a respective three-phase current of each of the n three-phase windings. The method also comprises, using vector-space decomposition (VSD), from the received current measurements, determining a measured current vector comprising fundamental frequency components of the measured currents combined and harmonic components of at least one harmonic frequency of the measured currents combined. The method also comprises, using VSD, from an obtained current reference for the multiphase machine, determining a reference current vector comprising fundamental frequency components of the current reference and harmonic components of the at least one harmonic frequency of the current reference. The method also comprises, using VSD and based on a difference between the measured current vector and the reference current vector, determining a multiphase voltage reference vector comprising fundamental frequency components and harmonic components of the at least one harmonic frequency. The method also comprises, for each of the n three-phase windings, calculating a three-phase voltage reference based on a predetermined relationship between the determined multiphase reference voltage vector and the respective n three-phase voltage references. The method also comprises, for each of the n three-phase windings, providing the calculated three-phase voltage reference to a respective three-phase modulator for a power electronic converter connected with said three-phase winding.

According to another aspect of the present invention, there is provided a computer program product comprising computer-executable components for causing the controller to perform an embodiment of the method of the present disclosure when the computer-executable components are run on processing circuitry comprised in the controller.

According to another aspect of the present invention, there is provided a controller for controlling a multiphase electrical machine having a stator with n three-phase windings (n≥2). The controller comprises a processing circuitry, and a data storage having computer-executable components executable by said processing circuitry whereby said controller is operative to receive measurements of a respective three-phase current of each of the n three-phase windings. The controller is also operative to, using VSD, from the received current measurements, determine a measured current vector comprising fundamental frequency components of the measured currents combined and harmonic components of at least one harmonic frequency of the measured currents combined. The controller is also operative to, using VSD, from an obtained current reference for the multiphase machine, determine a reference current vector comprising fundamental frequency components of the current reference and harmonic components of the at least one harmonic frequency of the current reference. The controller is also operative to, using VSD and based on a difference between the measured current vector and the reference current vector, determine a multiphase voltage reference vector comprising fundamental frequency components and harmonic components of the at least one harmonic frequency. The controller is also operative to, for each of the n three-phase windings, calculate a three-phase voltage reference based on a predetermined relationship between the determined multiphase reference voltage vector and the respective n three-phase voltage references. The controller is also operative to, for each of the n three-phase windings, provide the calculated three-phase voltage reference to a respective three-phase modulator for a power electronic converter connected with said three-phase winding.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

## BRIEF DESCRIPTION OF THE DRAWINGS

Embodiments will be described, by way of example, with reference to the accompanying drawings, in which:

Fig 1 is a schematic block diagram of a system comprising a multiphase electrical machine and a control arrangement there for, in accordance with embodiments of the present invention.

Fig 2 is a schematic functional illustration of 3n-phse calculations performed in the controller, in accordance with embodiments of the present invention.

Fig 3 is a schematic flow chart of an embodiment of the method of the present invention.

## DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

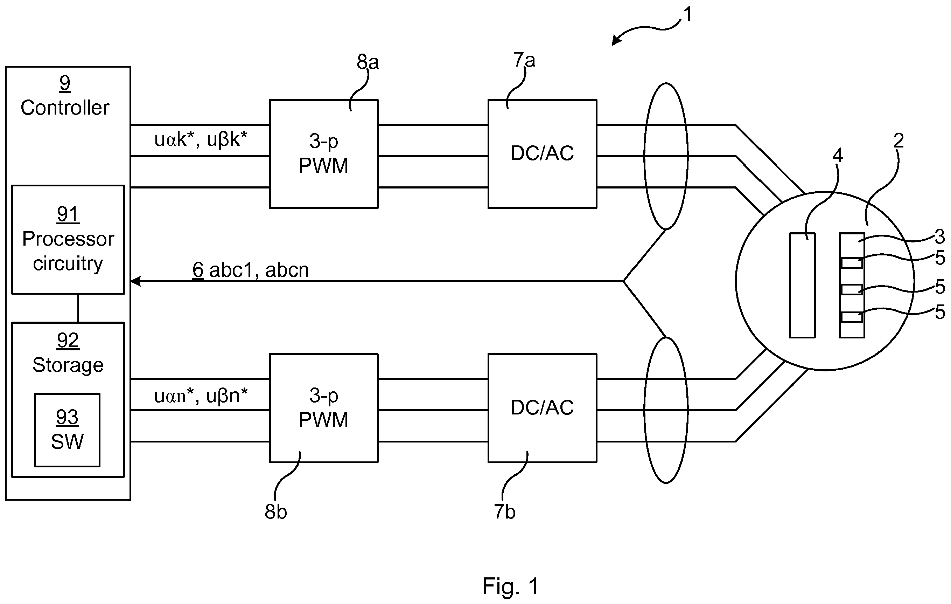

Figure 1 illustrates a multiphase electrical machine system comprising a multiphase electrical machine 2 and a control arrangement 1 for controlling said multiphase electrical machine 2. The multiphase electrical machine 2 comprises a stator 3 and a rotor 4. The stator 3 comprises a plurality of three-phase windings 5, typically on a communal core of the stator.

The control arrangement 1 comprises a 3n-phase controller 9, a plurality (n) of three-phase (3-p) pulse width modulators (PWM) 8, and a plurality of power electronic DC-AC (direct current-alternating current) converters 7. The controller 9 is arranged to output n three-phase voltage references, one for each k:th winding (k=1..n) of the n windings 5, e.g. $u\alpha k^*$ and $u\beta k^*$ if in $\alpha\beta$-frame which may be preferred. Each set of $u\alpha k^*$ and $u\beta k^*$ voltage references may then be fed to a respective 3-p PWM 8 arranged in parallel with each other and each dedicated to the control of a respective three-phase winding 5 of the stator 3. There is no need for 3n-multiphase modulation. Each of the PWM 8 outputs three-phase modulation signals for a respective three-phase power electronic converter 7, each dedicated to the three-phase winding 5 which its PWM 8 is related to. There may be one dedicated converter 7 to each winding 5, or there may be a plurality of converters 7 dedicated to each winding 5, e.g. two converters operating in parallel on the same modulation signals from the PWM 8 related to that winding 5.

In figure 1, the stator 3 comprises three 3-p windings 5 (n=3). Each winding is run by a 3-p converter 7 controlled by modulation signals from a respective 3-p PWM 8. To not clutter the figure, only two lines of PWM 8, herein denoted 8a and 8b, and converters 7, herein denoted 7a and 7b, are shown. Each k:th winding (k=1..n) is controlled by means of voltage references $u\alpha k^*$ and $u\beta k^*$ for said winding 5 from the controller 9.

Three-phase current measurements 6 are made on each of the n windings 5, e.g. at the output terminals of the respective converters 7, to obtain current measurements, e.g. in abc-frame as abci..abcn, which are fed to the controller 9.

The controller 9 comprises processing circuitry 91 e.g. a central processing unit (CPU). The processing circuitry 91 may comprise one or a plurality of processing units in the form of microprocessor(s). However, other suitable devices with computing capabilities could be comprised in the processing circuitry 91, e.g. an application specific integrated circuit (ASIC), a field programmable gate array (FPGA) or a complex programmable logic device (CPLD). The processing circuitry 91 is configured to run one or several computer program(s) or software (SW) 93 stored in a data storage 92 of one or several storage unit(s) e.g. a memory. The storage unit is regarded as a computer program product and may e.g. be in the form of a Random Access Memory (RAM), a Flash memory or other solid state memory, or a hard disk, or be a combination thereof. The processing circuitry 91 may also be configured to store data in the storage 92, as needed.

Thus, in accordance with some embodiments of the present invention, there is provided a computer program product 92 comprising computer-executable components 93 in the form of software (SW) for causing the controller 9 to perform an embodiment of the method of the present disclosure when the computer-executable components are run on processing circuitry 91 comprised in the controller.

Generally, the computer program product 92 is a non-transitory storage medium or computer readable medium (media) having instructions 93 in the form of SW stored therein, which can be used to program a computer to perform the method of the present invention. Examples of the storage medium can include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

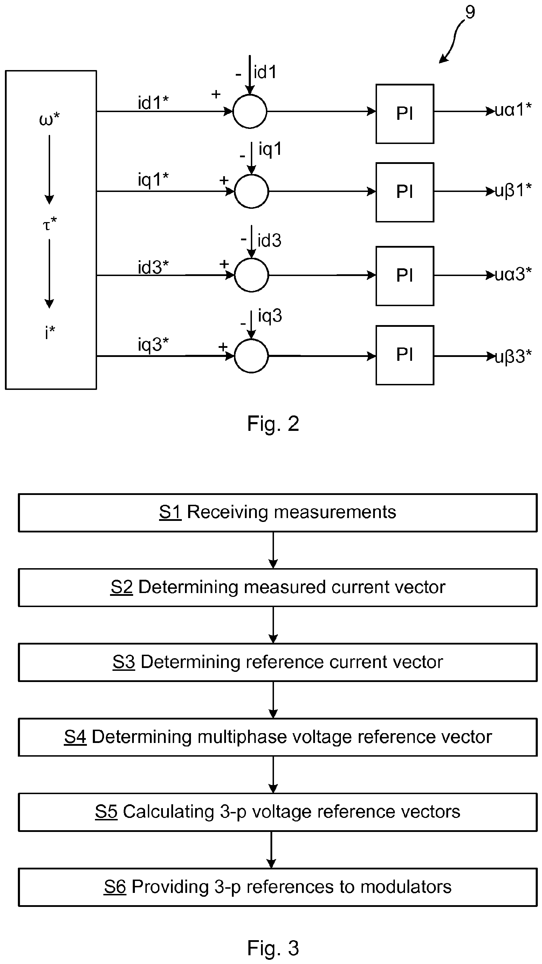

Figure 2 illustrates some operations in the controller 9. The 3n current reference i* is obtained, typically from a torque reference $\tau^*$ for the electrical machine 2, which in its turn may have been obtained from a speed reference $\omega^*$ for said machine 2. Depending on how the controller 9 has been programmed, the torque reference $\tau^*$ can be used to generate the current reference i* either as id* and iq* or as |i|* and its phase angle. The information is basically the same for both cases, just in other forms (cartesian coordinates vs. polar coordinates), and both are standard practice within the field.

The controller 9 uses the 3n current reference i* to determine a reference current vector comprising fundamental frequency components id1* and iq1* of the current reference i* and harmonic components of the at least one harmonic frequency of the current reference, here the third-order current harmonic components id3* and iq3* of the current reference i*. The components of the reference current vector are compared with the corresponding components of the measured current vector, i.e. idi and iq1 for the fundamental frequency components and id3 and iq3 for the third-order current harmonic components. The respective differences are used to determine the corresponding multiphase voltage reference vector comprising fundamental frequency components $u\alpha 1^*$ and $u\beta 1^*$ and third-order harmonic components $u\alpha 3^*$ and $u\beta 3^*$, in this example in $\alpha\beta$-frame, e.g. by means of respective proportional-integral (PI) regulation.

Based on a predetermined relationship, e.g. any of the examples $T^{ai}_{VSD \mapsto parallel, \alpha\beta 0}$ or $T_{VSD \mapsto parallel, dq0}$ discussed below, between the determined multiphase reference voltage vector and the n three-phase voltage references $u\alpha k^*$ and $u\beta k^*$ (see figure 1), i.e. respective voltage references for each three-phase winding of the stator, said three-phase voltage references $u\alpha k^*$ and $u\beta k^*$ are calculated for each k:th winding, k=i..n, of the n three-phase windings.

Figure 3 is a flow chart illustrating some embodiments of the invention. The method is performed by a controller 9 for controlling a 3n multiphase electrical machine 2 having a stator 3 with n three-phase windings 5. Typically, the machine 2 has only one stator 3, and said stator has only one core, why all the n three-phase windings are on the same (common) core in the stator.

Measurements of the respective three-phase currents of each of the n three-phase windings are received S1. Here, the windings are regarded as individual (distinct) three-phase windings, not as a combined n three-phase winding. The measurements may typically be current measurements e.g. in abc-frame ($abc_1$, $abc_2$..$abc_n$).

Using VSD, from the received current measurements ($abc_1$, $abc_2$..$abc_n$) of the n three-phase windings, a measured current vector is determined S2 for the 3n-phase electrical machine, i.e. for the combined n three-phases, not for each respective three-phase winding thereof. The determined S2 current vector comprises fundamental frequency components (e.g. idi and iq1 in dq-frame) of the measured currents combined and harmonic components (e.g. id3 and iq3 for the third order current harmonic, id5 and iq5 for the fifth order current harmonic and/or idw and iqw for an odd number w-order current harmonic, w denoting any harmonic present) of at least one harmonic frequency of the measured currents combined.

Before, after or in parallel with (typically in parallel with) the receiving S1 of the measurements and the determining S2 of the measured current vector, VSD is used to, from an obtained current reference i* (the "*" indicating that it is a reference) for the 3n multiphase machine, determining S3 a reference current vector comprising fundamental frequency components (e.g. id1* and iq1* in dq-frame) of the current reference and harmonic components (e.g. id3* and iq3* for the third order current harmonic, id5* and iq5* for the fifth order current harmonic and/or idw* and iqw* for a w-order current harmonic) of the at least one harmonic frequency of the current reference.

Still using the theory of VSD, and based on a difference between the determined S2 measured current vector and the determined S3 reference current vector, a 3n multiphase reference voltage vector (e.g. $\mathbf{u}\alpha\beta$* in $\alpha\beta$-frame) is determined $S_4$. The determined multiphase reference voltage vector comprises fundamental frequency components (u$\alpha$1* and u$\beta$1*) and harmonic components of the at least one harmonic frequency (e.g. u$\alpha$3* and u$\beta$3* for the third order current harmonic, u$\alpha$5* and u$\beta$5* for the fifth order current harmonic and/or u$\alpha$w* and u$\beta$w* for a w-order current harmonic).

Based on a predetermined relationship, e.g. any of the examples $T^{ai}_{VSD\mapsto parallel,\alpha\beta 0}$ or $T_{VSD\rightarrow parallel,dq0}$ discussed herein, between the determined S4 multiphase reference voltage vector and n three-phase voltage references u$\alpha$k* and u$\beta$k*, i.e. respective voltage references for each three-phase winding of the stator, three-phase voltage references are calculated S5 for each k:th winding, k=1..n, of the n three-phase windings.

Then, each of the respective calculated S5 three-phase voltage references u$\alpha$k* and u$\beta$k* are provided S6 to a respective three-phase modulator for a power electronic converter connected with said three-phase winding. Thus, each respective three-phase winding has at least one power electronic converter dedicated to it, and thus conventional three-phase modulators may be used for controlling the 3n multiphase machine using conventional three-phase modulation instead of more complex 3n multiphase modulation.

In some embodiments of the present invention, the three-phase voltage references, e.g. u$\alpha$k* and u$\beta$k*, are, when converted to abc-frame, i.e. to give uak*, ubk* and uck* for the respective phases a, b and c of a three-phase winding 5, phase shifted relative to each other such that the fundamental voltage reference for each k:th winding of the n windings is phase shifted by an amount of 60×(k-1)/n electrical degrees.

In some embodiments of the present invention, the at least one harmonic frequency comprises or consists of the third-order harmonic frequency. In some embodiments, the at least one harmonic frequency comprises all odd number order harmonic frequencies up to 3n-1 when the number of phases (3n) of the multiphase machine is even, and all odd number order harmonic frequencies up to 3n when the number of phases of the multiphase machine is odd.

In some embodiments of the present invention, the components of the determined S4 multiphase reference voltage vector are in a stationary $\alpha\beta$ reference frame. In some other embodiments, the components of the determined S4 multiphase reference voltage vector are in a rotating dq reference frame.

Embodiments of the present invention leverage on basic blocks of conventional three-phase control (like the three-phase pulse-width modulators 8) to build an enhanced regulation of 3n currents with a central controller 9 connected to a plurality of 3-p converters 7.

Embodiments of the invention allows for modularity and extendibility of the enhanced control for any value of n.

The solution of the present disclosure shifts the 3n-phase control from n decentralised controllers to a central controller 9, which is responsible for measuring and processing the currents order to provide full 3n-phase control with consideration of the mutual magnetic coupling.

Embodiments of the invention tries to preserve the existing modules of the original three-phase drive controllers, e.g. PWM 8 and converters 7, while maintaining its general 3n approach. In particular, the current measurement is kept per winding 5, and thus can be easily replicated in the central controller. The current controller, however, may work on the sum of the current vectors suitably shifted. Further, embodiments of the solution allow for the re-utilization of three-phase voltage modulators 8 rather than forcing the implementation of a 3n-phase voltage modulator. This feature is achieved by an algebraic transformation that preserves and distributes the higher-order harmonic control over the converters 7, which was not possible when the control problem was delegated to the independent n 3-phase controllers.

Example 1

In a first step, a central controller 9 overrides the local controllers, reading n sets of 3-phase currents and calculating n $\alpha\beta$ current vectors as in the original 3-phase control.

The system is composed by n power units (PU, each comprising a PWM 8 and a converter 7) in parallel which are connected to a central controller 9 with a bidirectional communication channel. Through this channel, among other signals, the measurements 6 of the phase currents from each of the power units reach the central controller for further processing.

For each power unit, two or three currents are sent back to the central controller. If only two currents are measured, the third one is obtained by applying the Kirchhoff s current law.

For each set of three currents obtained from a power unit, the central controller calculates the corresponding current vector in the $\alpha\beta$ stationary reference frame. This is obtained by applying the Clarke transformation matrix for 3-phase systems:

$$\boldsymbol{T}^{ai}_{abc\rightarrow\alpha\beta0} = \frac{2}{3}\begin{bmatrix} 1 & -\frac{1}{2} & -\frac{1}{2} \\ 0 & \frac{\sqrt{3}}{2} & -\frac{\sqrt{3}}{2} \\ \frac{\sqrt{2}}{2} & \frac{\sqrt{2}}{2} & \frac{\sqrt{2}}{2} \end{bmatrix}$$

where $T^{ai}_{abc\rightarrow\alpha\beta0}$ indicates a matrix with an amplitude-invariant (ai) transformation, from the stationary reference frame abc to the stationary reference frame $\alpha\beta0$ (the 0 component is disregarded if the homopolar is not of interest). The k:th current vector, with k = 1, ..., n is obtained as:

$$\boldsymbol{i}_{\alpha\beta,k} = \boldsymbol{T}^{ai}_{abc\rightarrow\alpha\beta0}\boldsymbol{i}_{abc,k}$$

where:

$$\boldsymbol{i}_{abc,k} = \begin{bmatrix} i_{a,k} \\ i_{b,k} \\ i_{c,k} \end{bmatrix}$$

is the vector containing the three-phase currents measured from the k:th power unit.

Notice that up to this point, the central controller 9 is not considering any phase shift between the n sets of three-phase windings 5, but it is only replicating what the single power units would do in case of independent three-phase control. The difference is that all calculations are performed in the central controller and thus all variables/measurements from the power units are accessible at once.

Example 2

In a second step, a new bi-dimensional current vector is calculated. Choosing one set of windings 5 as the reference one, all windings are phase shifted by an amount equal to 60*(k-1)/n electrical degrees, with k = 1, .., n. Thus, the current vector belonging to the k:th winding set is shifted by the same angle, and all the n shifted current vectors are added together. The resulting sum current vector is used in the current control (only one current control), thus generating a voltage reference vector. Conventional 3-phase control structures based on PI, predictive control, observers, estimators, etc. can be used, including the existing one in conventional drives. The regulation of the sum current vector is mathematically equivalent to the fundamental current vector control of a 3n-phase machine, thus accomplishing one of the tasks of the VSD approach.

Once all n current vectors $\boldsymbol{i}_{\alpha\beta,1}, ..., \boldsymbol{i}_{\alpha\beta,n}$ are calculated according the first step, a new current vector is calculated.

Since each k:th three-phase winding 5 is geometrically shifted from the predecessor by an angle equal to $\vartheta_w$ = 60 * (k - 1)/n, each current vector calculated in its own reference frame is rotated in such a way that all vectors refer to the reference frame of the first current vector, which is chosen as the reference for the zero electrical angle. This operation involves a matrix rotation in the clockwise direction indicated as $e^{-j\vartheta}{}_w$. The first vector $i_{\alpha\beta,1}$ requires no rotation.

Once all vectors are referred to the same reference frame, they are added together to form the new sum current vector $i_{\alpha\beta,sum}$. This current vector is controlled with a regulation type of any choice, which works on both components $\alpha$ and $\beta$, considering a current reference $i^*_{\alpha\beta}$ and generating a voltage reference $u^*_{\alpha\beta}$

As regards to the equivalence of the regulation of the sum current vector with the fundamental components calculated from the VSD theory, the following example is applied to a six-phase YY30 machine, but it is valid for any type of 3n-phase machine.

According to the VSD theory, the amplitude-invariant YY30 Clarke transformation from the abc frame to the $\alpha\beta0$ frame is the following:

$$\boldsymbol{T}^{ai}_{abc\mapsto\alpha\beta0} = \frac{1}{3}\begin{bmatrix} 1 & -\dfrac{1}{2} & -\dfrac{1}{2} & \dfrac{\sqrt{3}}{2} & -\dfrac{\sqrt{3}}{2} & 0 \\[2mm] 0 & \dfrac{\sqrt{3}}{2} & -\dfrac{\sqrt{3}}{2} & \dfrac{1}{2} & \dfrac{1}{2} & -1 \\[2mm] 1 & 1 & 1 & 0 & 0 & 0 \\[2mm] 0 & 0 & 0 & 1 & 1 & 1 \\[2mm] 1 & -\dfrac{1}{2} & -\dfrac{1}{2} & -\dfrac{\sqrt{3}}{2} & \dfrac{\sqrt{3}}{2} & 0 \\[2mm] 0 & -\dfrac{\sqrt{3}}{2} & \dfrac{\sqrt{3}}{2} & \dfrac{1}{2} & \dfrac{1}{2} & -1 \end{bmatrix}$$

and it is used to calculate a current vector in the $\alpha\beta$ frame as follows:

$$\boldsymbol{i}_{\alpha\beta} = \boldsymbol{T}^{ai}_{abc\mapsto\alpha\beta0}\boldsymbol{i}_{abc}$$

According to the VSD theory, the $\alpha\beta$ current vector is representable as:

$$\boldsymbol{i}_{\alpha\beta} = \begin{bmatrix} i_{\alpha,1} \\ i_{\beta,1} \\ i_{\alpha,3} \\ i_{\beta,3} \\ i_{\alpha,5} \\ i_{\beta,5} \end{bmatrix}$$

where the first couple of rows describe the fundamental quantities (currents), the second couple of rows describe third harmonics, and the third couple of rows describe fifth harmonics. The input current vector in the abc frame is as follows:

$$\boldsymbol{i}_{abc} = \begin{bmatrix} i_{a,1} \\ i_{b,1} \\ i_{c,1} \\ i_{a,2} \\ i_{b,2} \\ i_{c,2} \end{bmatrix}$$

where the three-phase currents of the first windings set 5 are followed by the three-phase currents of the second windings set 5.

Focusing on the first couple of rows of the VSD transformation matrix, it is noticeable that the first three terms of each row are the matrix equivalent to the three-phase Clarke transformation from the abc frame to the αβ frame (except a factor of 2 which is related to the number of phases):

$$\left. \boldsymbol{T}^{ai}_{abc \mapsto \alpha\beta} \right|_{3-phase} = \frac{2}{3} \begin{bmatrix} 1 & -\dfrac{1}{2} & -\dfrac{1}{2} \\ 0 & \dfrac{\sqrt{3}}{2} & -\dfrac{\sqrt{3}}{2} \end{bmatrix}$$

Consider now a rotational matrix that implements the clockwise rotation $e^{-j\vartheta_w}$, where $\vartheta_w$ = 30 electrical degrees (k=i, n = 2, 60*(k-1)/n = 30). Such a matrix has the following form:

$$\boldsymbol{T}_{\vartheta_w} = \begin{bmatrix} \cos(\vartheta_w) & -\sin(\vartheta_w) \\ \sin(\vartheta_w) & \cos(\vartheta_w) \end{bmatrix}$$

By clockwise rotating the three-phase Clarke transformation by the amount of $\vartheta_w$, a new matrix is obtained which is equivalent to the second three terms in the first couple of rows of the VSD transformation matrix:

$$\left. \boldsymbol{T}_{\vartheta_w} \boldsymbol{T}^{ai}_{abc \mapsto \alpha\beta} \right|_{3-phase} = \frac{2}{3} \begin{bmatrix} \dfrac{\sqrt{3}}{2} & -\dfrac{\sqrt{3}}{2} & 0 \\ \dfrac{1}{2} & \dfrac{1}{2} & -1 \end{bmatrix}$$

This demonstration can be generalized for any 3n-phase machine, following the VSD theory.

This proves that the fundamental components $i_{\alpha,1}$ and $i_{\beta,1}$ obtained from the VSD transformation matrix are none other than the representatives of the sum of the components of all n three-phase current vectors, after the three-phase current vectors have been rotated clockwise to match the reference frame of the zero electrical angle. Only a gain difference exists between the first two rows of the VSD transformation matrix and the calculations performed in the beginning of this example, which is essentially a non-existent problem since any gain difference can be easily incorporated in the gains of the controllers.

Example 3

In a third step, high-order harmonic currents are calculated according to matrix transformations from the VSD theory. Such current harmonics are controlled in parallel to the fundamental one, thus providing other bi-dimensional voltage reference vectors, one for each of the controlled harmonics. Re-utilization of 3-phase control structures is again possible, provided that the machine model and controller parameters are tuned for high-order harmonic equivalent electrical circuits.

In Example 2, the VSD transformation matrix for a six-phase YY30 machine was introduced as:

$$T^{ai}_{abc \mapsto \alpha\beta0} = \frac{1}{3} \begin{bmatrix} 1 & -\frac{1}{2} & -\frac{1}{2} & \frac{\sqrt{3}}{2} & -\frac{\sqrt{3}}{2} & 0 \\ 0 & \frac{\sqrt{3}}{2} & -\frac{\sqrt{3}}{2} & \frac{1}{2} & \frac{1}{2} & -1 \\ 1 & 1 & 1 & 0 & 0 & 0 \\ 0 & 0 & 0 & 1 & 1 & 1 \\ 1 & -\frac{1}{2} & -\frac{1}{2} & -\frac{\sqrt{3}}{2} & \frac{\sqrt{3}}{2} & 0 \\ 0 & -\frac{\sqrt{3}}{2} & \frac{\sqrt{3}}{2} & \frac{1}{2} & \frac{1}{2} & -1 \end{bmatrix}$$

and it is used to calculate a current vector in the xy frame as follows:

$$\boldsymbol{i}_{\alpha\beta} = \boldsymbol{T}^{ai}_{abc \mapsto \alpha\beta0} \boldsymbol{i}_{abc}$$

According to the VSD theory, the $\alpha\beta$ current vector is representable as:

$$\boldsymbol{i}_{\alpha\beta} = \begin{bmatrix} i_{\alpha,1} \\ i_{\beta,1} \\ i_{\alpha,3} \\ i_{\beta,3} \\ i_{\alpha,5} \\ i_{\beta,5} \end{bmatrix}$$

where the first couple of rows describe the fundamental quantities (currents), the second couple of rows describe third harmonics, and the third couple of rows describe fifth harmonics. The input current vector in the abc frame is as follows:

$$\boldsymbol{i}_{abc} = \begin{bmatrix} i_{a,1} \\ i_{b,1} \\ i_{c,1} \\ i_{a,2} \\ i_{b,2} \\ i_{c,2} \end{bmatrix} \boldsymbol{I}_{abc} = \begin{bmatrix} i_{a,1} \\ i_{b,1} \\ i_{c,1} \\ i_{a,2} \\ i_{b,2} \\ i_{c,2} \end{bmatrix}$$

where the three-phase currents of the first windings set 5 are followed by the three-phase currents of the second windings set 5.

Similar matrices can be built for 3n-phase machines, according to the VSD theory. Considering that Example 2 already processes the first two rows of the VSD transformation matrix (those related to the fundamental variables), this example focuses on the remaining rows which are representative of the $\alpha\beta$ components of the current harmonic vectors. Considering also the fundamental harmonic, the harmonics will be in number of q, with q = 1, 3, 5, 7,... 3n (when 3n is odd) or q = 1, 3, 5, 7,... 3n-1 (when 3n is even). For each current harmonic vector $\boldsymbol{i}_{\alpha\beta,q}$ calculated from the VSD transformation matrix, a current harmonic regulator can be applied. A current harmonic reference $\boldsymbol{i}^*_{\alpha\beta,q}$ should be provided accordingly, and a voltage reference $U_{xy,q,ref}$ is generated by the regulator.

Example 4

In a fourth step, the voltage reference vectors from all controllers are transformed back into a stationary reference frame and adapted to feed n sets of 3-phase voltage modulators 8 in parallel. This operation requires an additional matrix transformation that bypasses the need of a 3n-phase modulator, as originally required by the VSD theory. From this point onward, the conventional 3-phase modulation applied to each converter 7 can be used without further modifications.

It is assumed, at this step, that a series of voltage references according to the VSD theory are available from the regulation of the fundamental currents and of the harmonic currents. Such references are transformed back into a reference frame allowing the re-utilisation of n sets of 3-phase voltage modulators, rather than using a 3n-phase modulator as required by the original VSD theory.

It is assumed that the 3-phase modulators 8 accept a voltage reference vector with $\alpha_k\beta_k$ components, where the subscript k = 1, ..., n indicates that the components are referring to the local 3-phase reference frame seen by the converter 7 (thus, without phase shifting with respect to the zero electrical angle). Similar considerations are applicable if the modulators require different inputs.

Two cases may occur, depending on whether the VSD voltage references are available in the generalized stationary reference frame $\alpha\beta$ or in the generalized rotating reference frame dq obtained by applying the generalized Park transform. Such a case may appear when the regulation, as well as the voltage limitation for considering the maximum available voltage in the drive, is performed in the generalized dq reference frame. Both cases will be described here, assuming that the voltage limitation has been already performed. Numerical examples are based on six-phase YY30 machines, but the theory is general for any 3n-phase machine.

*Case 1: VSD voltage references in the $\alpha\beta$ reference frame.*

This is the easiest case, where the generalized $\alpha\beta$ reference frame of the VSD theory must be split into n local $\alpha_k\beta_k$ frames for 3-phase systems, each shifted by $\vartheta_w$ electrical degrees.

Let us consider the calculation of voltage references in the generalised abc reference frame, directly from the VSD voltage references:

$$\boldsymbol{u}_{abc}^* = \boldsymbol{T}_{\alpha\beta0\mapsto abc,VSD}^{ai}\,\boldsymbol{u}_{\alpha\beta0,VSD}^*$$

where, according to the VSD theory:

$$\boldsymbol{u}_{\alpha\beta0,VSD}^* = \begin{bmatrix} u_{\alpha,1,VSD}^* \\ u_{\beta,1,VSD}^* \\ u_{\alpha,3,VSD}^* \\ u_{\beta,3,VSD}^* \\ u_{\alpha,5,VSD}^* \\ u_{\beta,5,VSD}^* \end{bmatrix}$$

$$\boldsymbol{u}_{abc}^* = \begin{bmatrix} u_{a,1}^* \\ u_{b,1}^* \\ u_{c,1}^* \\ u_{a,2}^* \\ u_{b,2}^* \\ u_{c,2}^* \end{bmatrix}$$

$$T^{ai}_{\alpha\beta0\mapsto abc,VSD} = \begin{bmatrix} 1 & 0 & 1 & 0 & 1 & 0 \\ -\dfrac{1}{2} & \dfrac{\sqrt{3}}{2} & 1 & 0 & -\dfrac{1}{2} & -\dfrac{\sqrt{3}}{2} \\ -\dfrac{1}{2} & -\dfrac{\sqrt{3}}{2} & 1 & 0 & -\dfrac{1}{2} & \dfrac{\sqrt{3}}{2} \\ \dfrac{\sqrt{3}}{2} & \dfrac{1}{2} & 0 & 1 & -\dfrac{\sqrt{3}}{2} & \dfrac{1}{2} \\ -\dfrac{\sqrt{3}}{2} & \dfrac{1}{2} & 0 & 1 & \dfrac{\sqrt{3}}{2} & \dfrac{1}{2} \\ 0 & -1 & 0 & 1 & 0 & -1 \end{bmatrix}$$

In the six-phase YY30 machine example as shown above, the $\alpha\beta$ voltage reference vector contains information about the fundamental, the third and the fifth harmonic of the voltage. Notice that the $\alpha\beta$ voltage reference vector could be used as input of a voltage modulator that is aware of the phase shift between the different sets of windings (a so-called 3n-phase modulator), but this is not the aim of the present disclosure. Our aim is rather to re-use the 3-phase voltage modulators 8 already available to the n parallel converters 7, and for this reason a rearrangement of the voltage reference vector is required.

Let us assume, with no loss of generality, that the true voltages applied to the n sets of windings 5 are equal to the reference voltages, that is to say, the voltage modulators 8 are perfect modulators. We would like to generate the very same abc voltage references starting from the parallel of n local $\alpha_k\beta_k$ reference frames, where the components $u\alpha_k$ and $u\beta_k$ are used as inputs for the k:th 3-phase voltage modulator 8. We already know that the relation between the $\alpha_k\beta_k$ reference frame and the local $a_k b_k c_k$ frame is described by the conventional inverse Clarke transform:

$$T^{ai}_{\alpha_k\beta_k0_k\rightarrow a_k b_k c_k} = \begin{bmatrix} 1 & 0 & \dfrac{\sqrt{2}}{2} \\ -\dfrac{1}{2} & \dfrac{\sqrt{3}}{2} & \dfrac{\sqrt{2}}{2} \\ -\dfrac{1}{2} & -\dfrac{\sqrt{3}}{2} & \dfrac{\sqrt{2}}{2} \end{bmatrix}$$

which, by the way, resembles the upper left corner of the VSD inverse transformation matrix above. If we build a 3nx3n matrix that links the hypothetical voltage reference vectors for the n parallel frames $\alpha_k\beta_k$ to the reference vectors in the abc frame, we would obtain:

$$T^{ai}_{\alpha\beta0\mapsto abc,parallel} = \begin{bmatrix} T^{ai}_{\alpha_k\beta_k0_k\rightarrow a_k b_k c_k} & 0 & \cdots & 0 \\ 0 & T^{ai}_{\alpha_k\beta_k0_k\rightarrow a_k b_k c_k} & \cdots & 0 \\ 0 & 0 & \cdots & 0 \\ 0 & 0 & \cdots & T^{ai}_{\alpha_k\beta_k0_k\rightarrow a_k b_k c_k} \end{bmatrix}$$

$$u^*_{abc} = T^{ai}_{\alpha\beta0\mapsto abc,parallel} u^*_{\alpha\beta0,parallel}$$

where the subscript "parallel" indicates that the reference vector $u^*_{\alpha\beta0,parallel}$ contains the voltage references for each $\alpha_k\beta_k$ reference, in vertical sequence.

Since the generated n sets of abc voltage references is supposed to be the same as the one obtained directly by transforming the references directly with the VSD inverse matrix, the following equality holds:

$$T^{ai}_{\alpha\beta0\mapsto abc,VSD}\, u^{*}_{\alpha\beta0,VSD} = T^{ai}_{\alpha\beta0\mapsto abc,parallel}\, u^{*}_{\alpha\beta0,parallel}$$

This immediately returns the relation between the voltage references generated by the VSD approach and the voltage references for each $\alpha_k\beta_k$ reference, in vertical sequence:

$$u^{*}_{\alpha\beta0,parallel} = \left(T^{ai}_{\alpha\beta0\mapsto abc,parallel}\right)^{-1} T^{ai}_{\alpha\beta0\mapsto abc,VSD}\, u^{*}_{\alpha\beta0,VSD}$$

$$T^{ai}_{VSD\mapsto parallel,\alpha\beta0}\, u^{*}_{\alpha\beta0,VSD}$$

where, in the case of the six-phase YY30 machine, it is:

$$T^{ai}_{VSD\mapsto parallel,\alpha\beta0} = \begin{bmatrix} 1 & 0 & 0 & 0 & 1 & 0 \\ 0 & 1 & 0 & 0 & 0 & -1 \\ 0 & 0 & \sqrt{2} & 0 & 0 & 0 \\ \dfrac{\sqrt{3}}{2} & \dfrac{1}{2} & 0 & 0 & -\dfrac{\sqrt{3}}{2} & \dfrac{1}{2} \\ -\dfrac{1}{2} & \dfrac{\sqrt{3}}{2} & 0 & 0 & \dfrac{1}{2} & \dfrac{\sqrt{3}}{2} \\ 0 & 0 & 0 & \sqrt{2} & 0 & 0 \end{bmatrix}$$

Such a matrix is the intermediary between the VSD voltage references in the generalized $\alpha\beta$ frame, and the voltage references in the local $\alpha_k\beta_k$ frames which serve as input of the n 3-phase voltage modulators.

*Case 2: VSD voltage references in the dq reference frame.*

If the voltage references are still in the generalized dq reference frame of the VSD theory, a similar mathematical development can be made to obtain a relation between the VSD dq frame and the dq frames of the local 3-phase systems connected to each converter 7. The equations look the same as for case 1, where the subscripts $\alpha\beta$ must be substituted by dq. The relation matrix, however, becomes numerically different, and in the six-phase YY30 machine case it is the following:

$$T_{VSD\mapsto parallel,dq0} = \begin{bmatrix} 1 & 0 & 0 & 0 & \cos(6\vartheta_{me}) & -\sin(6\vartheta_{me}) \\ 0 & 1 & 0 & 0 & -\sin(6\vartheta_{me}) & -\cos(6\vartheta_{me}) \\ 0 & 0 & \sqrt{2}\cos(3\vartheta_{me}) & -\sqrt{2}\sin(3\vartheta_{me}) & 0 & 0 \\ 1 & 0 & 0 & 0 & -\cos(6\vartheta_{me}) & \sin(6\vartheta_{me}) \\ 0 & 1 & 0 & 0 & \sin(6\vartheta_{me}) & \cos(6\vartheta_{me}) \\ 0 & 0 & \sqrt{2}\sin(3\vartheta_{me}) & \sqrt{2}\cos(3\vartheta_{me}) & 0 & 0 \end{bmatrix}$$

Notice the presence of the electrical angle $\vartheta_{me}$ in the matrix, which is a consequence of the fact that the local rotating reference frames are always rotating with the electrical angle, while the VSD general dq reference frame has different sub-reference frames, each rotating with one harmonic (in the case of the YY30 machine, there are three sub-reference frames rotating with the fundamental, the third and the fifth harmonic).

*Mode of implementation*

As anticipated above, both case 1 and case 2 are viable solutions for the problem of transforming VSD-generated references into local 3-phase references. It is up to the person skilled in the art to choose the best implementation mode, which accounts for the modifications required in the control algorithm flow and the final execution time of the running algorithm.

In accordance with a more general embodiment of the present invention, there is provided a method for controlling a multiphase electrical machine 2 having a stator 3 with three-phase windings 5. The method comprises receiving S1 current measurements 6 of the windings. The method also comprises using VSD to determine S2 a measured current vector comprising fundamental and harmonic frequency components of the measured currents combined, determine S3 a reference current vector comprising fundamental and harmonic frequency components of the current reference, and determine S4 a multiphase voltage reference vector comprising fundamental and harmonic frequency components. The method also comprises, for each of the n three-phase windings, calculating S5 a three-phase voltage reference based on a predetermined relationship between the determined S4 multiphase reference voltage vector and the respective n three-phase voltage references. The method also comprises, providing S6 the calculated S5 three-phase voltage reference to a respective three-phase modulator (8) for a power electronic converter (7) connected with said three-phase winding.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A method for controlling a multiphase electrical machine (2) having a stator (3) with n three-phase windings (5), $n \geq 2$, the method comprising:

   receiving (S1) measurements (6) of a respective three-phase current of each of the n three-phase windings;
   using vector-space decomposition, VSD, from the received (S1) current measurements (6), determining (S2) a measured current vector comprising fundamental frequency components of the measured currents combined and harmonic components of at least one harmonic frequency of the measured currents combined;
   using VSD, from an obtained current reference (i*) for the multiphase machine, determining (S3) a reference current vector comprising fundamental frequency components of the current reference and harmonic components of the at least one harmonic frequency of the current reference;
   using VSD and based on a difference between the measured current vector and the reference current vector, determining (S4) a multiphase voltage reference vector comprising fundamental frequency components and harmonic components of the at least one harmonic frequency;
   for each of the n three-phase windings (5), calculating (S5) a three-phase voltage reference based on a predetermined relationship between the determined (S4) multiphase reference voltage vector and the respective n three-phase voltage references; and
   for each of the n three-phase windings (5), providing (S6) the calculated (S5) three-phase voltage reference to a respective three-phase modulator (8) for a power electronic converter (7) connected with said three-phase winding.

2. The method of claim 1, wherein the three-phase voltage references are, when converted to abc-frame phase shifted relative to each other such that the fundamental voltage reference for each k:th winding of the n windings (5) is phase shifted by an amount of $60 \times (k-1)/n$ electrical degrees.

3. The method of any preceding claim, wherein the at least one harmonic frequency comprises the third-order harmonic frequency.

4. The method of claim 3, wherein:

   when the number of phases of the multiphase machine (2) is even, the at least one harmonic frequency comprises all odd number order harmonic frequencies up to 3n-1;
   when the number of phases of the multiphase machine (2) is odd, the at least one harmonic frequency comprises all odd number order harmonic frequencies up to 3n.

5. The method of any preceding claim, wherein the components of the determined (S4) multiphase voltage reference vector are in a stationary $\alpha\beta$ reference frame.

6. The method of any claim 1-4, wherein the components of the determined (S4) multiphase voltage reference vector are in a rotating dq reference frame.

7. A computer program product (92) comprising computer-executable components (93) for causing the controller (9) to perform the method of any preceding claim when the computer-executable components are run on processing circuitry (91) comprised in the controller.

8. A controller (9) for controlling a multiphase electrical machine (2) having a stator (3) with n three-phase windings (5), n≥2, the controller comprising:

   a processing circuitry (91); and
   a data storage (92) having computer-executable components (93) executable by said processing circuitry whereby said controller is operative to:

   receive measurements (6) of a respective three-phase current of each of the n three-phase windings;
   using VSD, from the received current measurements (6), determine a measured current vector comprising fundamental frequency components of the measured currents combined and harmonic components of at least one harmonic frequency of the measured currents combined;
   using VSD, from an obtained current reference (i*) for the multiphase machine, determine a reference current vector comprising fundamental frequency components of the current reference and harmonic components of the at least one harmonic frequency of the current reference;
   using VSD and based on a difference between the measured current vector and the reference current vector, determine a multiphase voltage reference vector comprising fundamental frequency components and harmonic components of the at least one harmonic frequency;
   for each of the n three-phase windings (5), calculate a three-phase voltage reference based on a predetermined relationship between the determined multiphase reference voltage vector and the respective n three-phase voltage references; and
   for each of the n three-phase windings (5), provide the calculated three-phase voltage reference to a respective three-phase modulator (8) for a power electronic converter (7) connected with said three-phase winding.

Fig. 1

Fig. 2

Fig. 3

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/315577 A1 (SUZUKI TAKASHI [JP]) 27 October 2016 (2016-10-27) <br> * paragraph [0007] * <br> * paragraph [0048] * <br> * paragraph [0059]; figure 2 * <br> * paragraph [0065] * <br> * paragraph [0057] * <br> * paragraph [0058] * <br> * paragraph [0061]; figure 1 * <br> * paragraph [0060] * <br> * paragraph [0013] * <br> * paragraph [0086] * <br> ----- | 1,2,6-8 | INV. <br> H02P29/50 <br> H02P6/00 |
| X | HU YASHAN ET AL: "Torque Capability Enhancement of Dual Three-Phase PMSM Drive With Fifth and Seventh Current Harmonics Injection", <br> IEEE TRANSACTIONS ON INDUSTRY APPLICATIONS, IEEE SERVICE CENTER, PISCATAWAY, NJ, US, <br> vol. 53, no. 5, 23 May 2017 (2017-05-23), pages 4526-4535, XP011661073, <br> ISSN: 0093-9994, DOI: 10.1109/TIA.2017.2707330 <br> [retrieved on 2017-09-21] <br> * paragraph [Abstract] * <br> * page 1, right-hand column - paragraph middle * <br> * figure 5 * <br> ----- | 1,3-5 | TECHNICAL FIELDS SEARCHED (IPC) <br><br> H02P |

The present search report has been drawn up for all claims

| Place of search | Date of completion of the search | Examiner |
|---|---|---|
| Munich | 28 June 2019 | Fligl, Stanislav |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 16 3993

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2019

| Patent document cited in search report | Publication date | Patent family member(s) | Publication date |
|---|---|---|---|
| US 2016315577 A1 | 27-10-2016 | CN 106067753 A<br>DE 102016205261 A1<br>JP 6455295 B2<br>JP 2016208668 A<br>US 2016315577 A1 | 02-11-2016<br>27-10-2016<br>23-01-2019<br>08-12-2016<br>27-10-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHAO et al.** Space Vector PWM Control of Dual Three-Phase Induction Machine Using Vector Space Decomposition. *IEEE TRANSACTIONS ON INDUS-TRY APPLICATIONS,* September 1995, vol. 31 (5), 1100-1109